# FASCICULE DE BREVET EUROPEEN

(11) **EP 3 273 149 B1**
(45) Date de publication et mention de la délivrance du brevet: **20.10.2021**
(21) Numéro de dépôt: 17181044.3
(22) Date de dépôt: 12.07.2017
(51) Int. Cl.: F21S 43/20, F21S 43/237, F21S 43/245, F21S 43/50, F21S 43/251, F21V 5/04, F21S 43/14, F21S 43/241, F21S 43/243

(54) **MODULE LUMINEUX POUR VÉHICULE AUTOMOBILE**
LEUCHTMODUL FÜR KRAFTFAHRZEUGE
LIGHT MODULE FOR A MOTOR VEHICLE

(30) Priorité: 18.07.2016 FR 1656838
(43) Date de publication de la demande: 24.01.2018
(73) Titulaire: Valeo Vision Belgique, 7822 Meslin l'Evêque (BE)
(72) Inventeur: VALOIS, Christophe, 7822 Meslin l'Éveque (BE); DEPOORTER, Kurt, 7822 Meslin l'Éveque (BE); LUU, Frédéric, 7822 Meslin l'Éveque (BE)
(74) Mandataire: Valeo Visibility

(56) Documents cités:
- EP-A1- 0 306 399
- WO-A1-2012/120441
- WO-A1-2013/113728
- FR-A1- 3 008 774
- US-A1- 2010 195 342
- US-A1- 2014 078 764

## Description

La présente invention a pour objet un module lumineux équipant un véhicule automobile, comportant au moins une source de lumière, un guide optique et un élément optique supplémentaire. L'invention trouve des applications dans le domaine de l'éclairage et/ou de la signalisation pour véhicule automobile.

Actuellement, il est connu d'utiliser, dans les dispositifs d'éclairage de la route ou les dispositifs de signalisation du véhicule, un ou plusieurs guides optiques associés respectivement à une source de lumière, et agencés pour propager depuis une face d'entrée vers une face de sortie, par réflexions totales internes successives, des rayons émis par la source de lumière, lesdits rayons étant projetés hors du guide optique pour former un faisceau lumineux déterminé. On peut utiliser de tels agencement avec des guides optiques pour réaliser des fonctions d'éclairage et/ou de signalisation avec des grandeurs photométriques déterminées, ou bien encore dans des dispositifs d'éclairage de l'habitacle du véhicule. WO 2012/120441 A1 divulgue un dispositif d'éclairage connu de l'art antérieur.

L'utilisation de ces guides optiques s'inscrit dans un contexte où les constructeurs automobiles sont de plus en plus désireux de créer et d'attribuer une signature visuelle à un véhicule automobile. La possibilité offerte, à titre d'exemple, de courber ces guides optiques et de présenter une bande de lumière, ondulée ou suivant le galbe d'un véhicule, permet de distinguer les véhicules par la réalisation de dispositifs d'éclairage et/ou de signalisation, intérieur ou extérieur, pouvant différer facilement d'une marque de véhicule à l'autre.

L'invention s'inscrit ainsi dans un double contexte de liberté stylistique et d'efficacité photométrique de l'éclairage et/ou de la signalisation réalisée, en proposant une alternative aux modules lumineux existants à guide(s) optique(s), qui permette la projection d'un faisceau en sortie du module lumineux qui soit non seulement à la forme souhaitée mais qui présente des grandeurs photométriques appropriées, sans nécessiter la mise en œuvre de sources de lumière à fort flux.

Un module lumineux pour véhicule automobile, comporte selon l'invention au moins une source de lumière, un guide optique comportant une face d'entrée de la lumière émise par la source de lumière et une face de sortie de la lumière, le guide optique étant agencé pour permettre la propagation de la lumière depuis sa face d'entrée vers sa face de sortie. Il comporte en outre un cache opaque disposé sur le chemin des rayons lumineux en sortie du guide optique et comportant au moins une fenêtre autorisant le passage de la lumière, et il comporte au moins un élément optique supplémentaire obturant la fenêtre. L'élément optique supplémentaire comprend un dispositif optique convergent. Le guide optique est agencé pour permettre la propagation de la lumière par des réflexions internes totales successives depuis sa face d'entrée vers sa face de sortie. Le module lumineux comprend une pluralité des guides optiques. La cache opaque comprend une pluralité de fenêtres, alignées selon un axe d'alignement perpendiculairement à l'axe d'allongement des guides optiques.

L'élément optique supplémentaire comprend une surface d'entrée des rayons émis en sortie du guide optique et une surface de sortie d'un faisceau lumineux.

Selon une série de caractéristiques de l'invention, prises seules ou en combinaison, on pourra prévoir que :
- le dispositif optique convergent est disposé sur une face interne de l'élément optique supplémentaire tournée en regard de la face de sortie du guide optique ;
- le dispositif optique convergent est disposé sur la surface de sortie de l'élément optique supplémentaire ;
- le dispositif optique convergent comprend une zone convexe dirigée vers la face de sortie du guide optique ;
- la zone convexe a un rayon de courbure défini en fonction de la distance entre le centre de courbure de la zone convexe et la face de sortie du guide optique ;
- le dispositif optique convergent est une lentille cylindrique, qui s'étend notamment selon un axe central parallèle à un axe d'allongement du guide optique ;
- un foyer objet de la lentille cylindrique est centrée sur le guide optique ; on peut concevoir que le foyer de la lentille cylindrique soit ciblée sur le centre du guide optique ou sur sa face de sortie ;
- la zone convexe est translucide ;
- la zone convexe a une texture grainée ;
- la zone convexe peut être surmoulée sur l'élément optique supplémentaire, ou bien venir de matière avec et élément optique ;
- le dispositif optique convergent comprend une bordure transparente autour de la zone convexe ;
- la fenêtre est sensiblement un parallélogramme évidé, de dimensions égales à la face de sortie du guide optique ;
- chaque fenêtre est obturée par un dispositif optique convergent ; et notamment, on peut prévoir un dispositif optique convergent propre à chaque fenêtre ;
- l'élément optique supplémentaire comprend une pluralité de dispositifs optiques convergents alignés ;
- chaque fenêtre est associée à un guide optique et/ou à une source de lumière propre ;
- au moins deux fenêtres sont séparées l'une de l'autre par le cache opaque empêchant le passage de la lumière ;
- la zone convexe du dispositif optique convergent a un rayon de courbure défini en fonction de la hauteur de la fenêtre à laquelle la zone convexe correspond ;
- l'élément optique supplémentaire et la cache opaque forme une seule pièce.

L'invention concerne en outre un dispositif d'éclairage et/ou de signalisation pour véhicule automobile comprenant un module lumineux tel qu'il vient d'être présenté.

D'autres caractéristiques, détails et avantages de l'invention ressortiront plus clairement à la lecture de la description donnée ci-après à titre indicatif en relation avec des dessins dans lesquels :
- la figure 1 est une vue en perspective, vue de trois quart avant, du module lumineux, selon un mode de réalisation de l'invention, dans lequel on a rendu visible un bout d'un guide optique, ainsi qu'un élément optique supplémentaire et un cache opaque ;
- la figure 2 est une vue en perspective similaire à celle de la figure 1, dans laquelle on a retiré l'élément optique supplémentaire, afin de rendre plus visible les fenêtres formées dans le cache opaque ;
- la figure 3 est une vue en perspective similaire de celle de la figure 1, dans laquelle on a retiré l'élément optique supplémentaire, afin de rendre plus visible les fenêtres formées dans le cache opaque ;
- la figure 4 est une vue en perspective, vue de trois quart arrière, de l'élément optique supplémentaire et du cache opaque ;
- la figure 5 est une vue de détail d'un dispositif optique convergent de l'élément optique supplémentaire ;
- et la figure 6 est une vue en coupe transversale du dispositif optique convergent selon un aspect de l'invention et du guide de lumière associé.

Les modes de réalisation qui sont décrits dans la suite ne sont nullement limitatifs ; on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur.

Un module lumineux 2 selon l'invention est apte à émettre un faisceau lumineux de sortie présentant un effet de style.

Ce module lumineux 2 comporte un boîtier définissant un logement dans lequel sont disposés au moins une source de lumière 4 et au moins un guide optique 6, chaque source de lumière étant respectivement associée à un guide optique configuré pour propager les rayons émis par la source sur une longueur donnée et pour les faire sortir en direction de la sortie du module lumineux. Le logement formé dans le boîtier est fermé par la mise en place d'une glace de fermeture sur le boîtier, la glace de fermeture étant configurée pour être traversée en certaines zones par les rayons lumineux émis par le au moins un guide optique.

Les sources de lumière 4 consistent chacune en une source à semiconducteurs, et par exemple une diode électroluminescente fixée sur une carte de circuits imprimés, qui peut être commune à l'ensemble des diodes électroluminescentes, et qui peut notamment être fixée sur le boîtier du module lumineux.

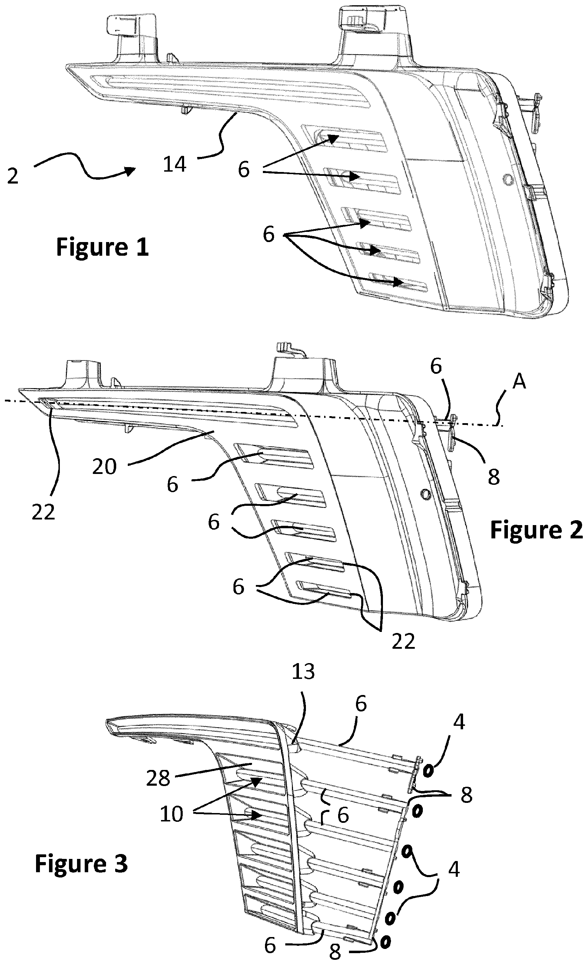

Dans l'exemple illustré, chaque guide optique 6 présente une section circulaire et un profil courbé, avec un axe principal d'allongement A. Le guide optique 6 comporte une face d'entrée 8 de la lumière émise par la source de lumière 4 et une face de sortie 10. Le guide optique 6, visible sur les figures 1, 3 et 4 comporte en outre une face arrière de réflexion 12, opposée à la face de sortie 10, qui est pourvue d'une succession de prismes.

Les guides optiques peuvent être réalisées dans un matériau permettant la propagation des rayons lumineux par réflexion interne depuis la face d'entrée vers la face de sortie, par exemple du poylcarbonate (PC) ou du polyméthacrylate de méthyle (PMMA) ou du silicone ou du verre.

On comprend que les rayons lumineux émis par une source de lumière pénètrent dans le guide optique correspondant par la face d'entrée 8 et qu'ils se propagent le long du tube formant le guide optique par des réflexions internes totales successives, jusqu'à ce que ces rayons rencontrent les prismes de la face arrière de réflexion : il en résulte une modification de l'angle d'incidence des rayons et certains d'entre eux impactent la face de sortie, en regard de cette face arrière de réflexion 12, avec un angle tel qu'ils sortent du guide optique.

De tels guides optiques 6 permettent d'obtenir l'émission d'une lumière dont l'aspect est sensiblement homogène sur la longueur de la face de sortie du guide optique 6, lorsque celui-ci est à l'état allumé.

Les guides optiques 6 s'agencent sensiblement transversalement le long du module lumineux, le long d'un axe principal d'allongement A, portés par un support 13 qui présente des parois inclinées entourant respectivement chacun des guides et dont une extrémité est au contact du guide tandis que l'extrémité libre va en s'évasant vers la sortie du module lumineux. Ces parois forment des réflecteurs 28, réfléchissant la lumière émise de la face de sortie 10 du guide optique 6, en direction de la sortie du module lumineux. Ces réflecteurs 28 sont disposés de manière à contenir les rayons sortant de la face de sortie 10 du guide optique dans une plage angulaire déterminée, étant entendu que l'orientation des réflecteurs peut notamment varier en fonction de la position du guide optique lorsque le module lumineux est implanté dans le véhicule.

On va maintenant décrire plus en détails un premier élément permettant l'obtention d'un effet de style particulier du faisceau de lumière en sortie du module lumineux 2, et qui comporte un élément optique supplémentaire 14 et un cache opaque 20, formant la glace de fermeture du module lumineux 2.

L'élément optique supplémentaire 14 comporte au moins un dispositif optique convergent 16 configuré pour regrouper les rayons en sortie du guide optique correspondant.

Le dispositif optique convergent 16 comporte au moins une zone convexe 30 translucide formée sur la face interne de l'élément optique supplémentaire 14, c'est-à-dire la face tournée vers l'intérieur du boîtier, en direction du guide optique. La zone convexe 30 est agencée sur le passage des rayons émis en sortie du guide optique et réfléchis par les parois du support 13, et configurée de sorte que la partie bombée de cette zone convexe est dirigée vers la face de sortie 10 du guide optique 6. En d'autres termes, la zone convexe est orientée de sorte que son centre de courbure est disposé à l'opposé du guide optique par rapport au dispositif optique convergent 16.

Tel que cela a été précisé, de préférence, la lentille convergente est disposée sur une surface d'entrée 24 de l'élément optique supplémentaire, également dénommée face interne 24, c'est-à-dire en regard de la face de sortie 10 du guide optique 6. Dans une variante de réalisation, non illustrée, la lentille convergente peut être disposée sur une surface de sortie 26 de l'élément optique supplémentaire 14.

Dans le mode de réalisation illustré, la présente zone convexe 30 translucide est une lentille convergente cylindrique. Cette lentille convergente est cylindrique en présentant un axe central C parallèle, ou sensiblement parallèle, à l'axe d'allongement A du guide optique 6. De la sorte, la lentille convergente est configurée pour concentrer les rayons de lumière issus de la face de sortie 10 et réfléchis par les parois du boîtier 13. On comprend que la lentille cylindrique s'étend sur une distance, selon l'axe d'allongement A, sensiblement égale à celle de la face de sortie du guide optique 6, de manière à récupérer la totalité des rayons. La lentille convergente, ou autrement dit la zone convexe 30, a un rayon de courbure défini selon la concentration des rayons émis souhaitée. A titre d'exemple, la lentille convergente peut avoir un rayon de 10 à 15 mm, et notamment de 13 mm. Le rayon de courbure de la zone convexe peut par exemple être fonction de la distance entre le centre de courbure de la zone convexe et la face de sortie 10 du guide optique 6.

Plus particulièrement, on peut prévoir que le foyer objet de la lentille convergente est disposé au voisinage de l'axe central d'allongement du guide optique, ou bien au voisinage de la portion de la face de sortie 10 la plus proche de la lentille convergente.

Dans l'exemple illustré, la lentille cylindrique est centrée verticalement sur le guide optique, c'est-à-dire que lorsque le module lumineux est en place dans le véhicule, le centre de la lentille cylindrique de l'élément optique supplémentaire 14 et le centre du guide optique 6 associé sont disposés à la même hauteur par rapport au sol.

La lentille convergente comprend au moins une zone dans laquelle on a réalisé une texture grainée donnant un effet flou. A titre d'exemple, le grain peut présenter une dimension 20µm. On cherche ainsi à concilier l'effet de style souhaité et la performance optique du module, étant entendu que l'on doit éviter d'avoir un grain trop grand car la diffusion serait trop importante et rendrait le produit inefficace. Par ailleurs, on prend en considération le fait que la diffusion d'un même grain dépend de la distance entre le guide optique et la zone grainée.

Cette texture grainée peut être réalisée en surface sur la face interne de la lentille, ou bien sur la face externe, c'est-à-dire la face tournée à l'opposé du guide optique.

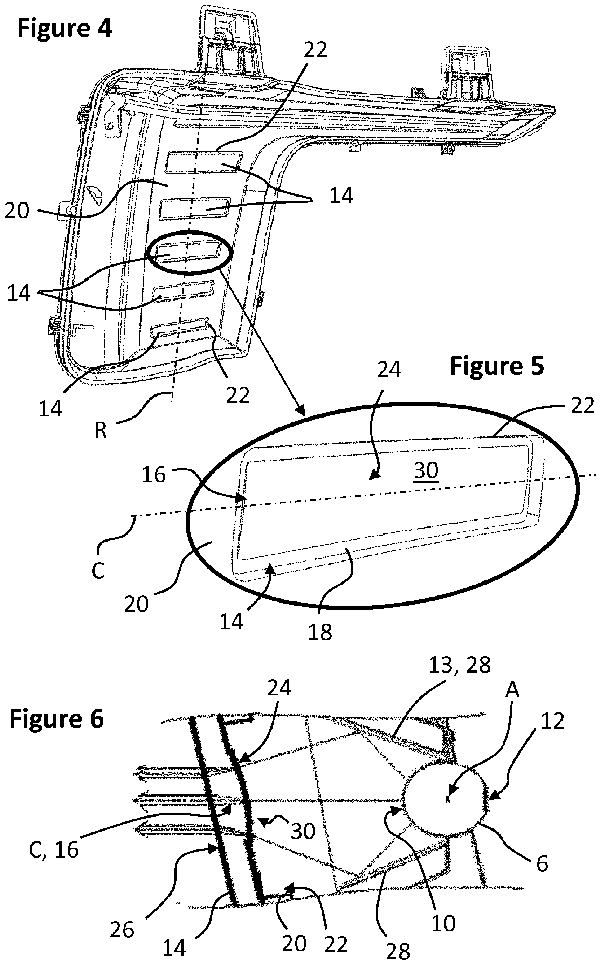

Le grainage du dispositif optique convergent 16 permet la formation, après que les rayons R (dont certains sont représentés à titre d'exemple sur la figure 6) émis par la source de lumière et propagés par le guide traversent l'élément optique supplémentaire 14, d'un faisceau lumineux en sortie de module lumineux, via la surface de sortie 26 de la lentille, qui est diffus et homogène. Le grainage du dispositif optique convergent participe en outre à empêcher la vue par un observateur extérieur de la disposition du guide optique 6 dans le module lumineux 2.

Cette zone convexe 30 est préférentiellement bordée par une bordure 18 plane, transparente, notamment utile lorsque l'élément optique supplémentaire 14 est réalisé par surmoulage du cache opaque 20. On comprend que l'on cherche à limiter au maximum cette bordure, qui correspond à la zone de fermeture lors du surmoulage, pour obtenir un système le plus efficace possible. Notamment, cette bordure doit être au minimum égale à 1mm.

Le cache opaque 20 forme avec l'élément optique supplémentaire 14 un premier élément venant en recouvrement de l'ensemble du module lumineux 2. On comprend que le cache opaque vise à interdire le passage de lumière en son travers, en n'autorisant ce passage qu'à travers au moins une fenêtre 22 au centre de laquelle est disposé un dispositif optique convergent 16.

Ce cache opaque 20 peut être formé par un revêtement de matière opaque, ou bien être réalisé par un matériau opaque. Il convient de noter que dans le cas illustré le cache opaque 20 est surmoulé sur l'élément optique supplémentaire 14, mais on notera que d'autres moyens de solidarisation pourraient être mis en œuvre et notamment la réalisation en une seule et même pièce du cache opaque 20 et de l'élément optique supplémentaire 14 forme une seule et même pièce.

Chaque fenêtre 22 est sensiblement un parallélogramme, de préférence un rectangle. Chaque fenêtre 22 est associée ou à un dispositif optique convergent 16, à un guide optique 6 et/ou à une source de lumière 4 propre.

Une pluralité de dispositifs optiques convergents 16 est disposée sur l'élément optique supplémentaire 14, en rangée selon un axe d'alignement R perpendiculaire à l'axe d'allongement A d'un guide optique, et respectivement en vis-à-vis de la face de sortie 10 d'un guide optique 6.

Dans le cas illustré, le module lumineux 2 comprend six sources de lumières 4 couplées à six guides optiques 6, et un guide principal s'étend sur sensiblement toute la longueur du module lumineux, tandis que les cinq autres présentent des longueurs moindres, sensiblement égales, et sont reliés ensemble à l'une de leur extrémité. Il résulte de ce nombre de six guides optiques que l'élément optique supplémentaire 14 recouvrant l'ensemble des guides optiques 6 comprend de son côté six dispositifs optiques convergents 16, chacun en regard d'un guide optique 6, notamment d'une face de sortie 10 de guide optique 6. Les six guides optiques 6 présentent des longueurs d'allongement, notamment des longueurs de faces de sortie L différentes, décroissantes dans le sens haut-bas ou bas-haut, c'est-à-dire que la longueur d'allongement de chaque guide optique 6 est également décroissante dans le sens haut-bas ou bas-haut.

Et il résulte de ce nombre de six guides optiques que le cache opaque 20 comprend six fenêtres 22, à l'intérieur desquelles sont respectivement ménagée un guide optique. On notera que les fenêtres 22 sont alignées parallèlement entre elles selon un axe d'alignement R perpendiculairement à l'axe d'allongement A des guides optiques 6. La hauteur des fenêtres se comprend comme la dimension selon l'axe d'alignement R, et la hauteur d'une fenêtre à l'autre peut varier. Le rayon de courbure du dispositif optique convergent 16 peut dépendre de la hauteur de la fenêtre à laquelle il correspond, afin d'obtenir une concentration identique des rayons lumineux en sortie de chaque fenêtre.

Tel qu'il vient d'être présenté, un module lumineux 2 peut être indifféremment disposé dans un dispositif d'éclairage et/ou de signalisation extérieur ou intérieur de véhicule automobile.

## Revendications

1. Module lumineux (2) pour véhicule automobile, comportant :
- au moins une source de lumière (4),
- au moins un guide optique (6) de lumière comportant une face d'entrée (8) de la lumière émise par la source de lumière et une face de sortie (10) de la lumière, le guide optique (6) étant agencé pour permettre la propagation de la lumière depuis sa face d'entrée (8) vers sa face de sortie (10),
- un cache opaque (20) disposé sur le chemin des rayons lumineux en sortie du guide optique et comportant au moins une fenêtre (22) autorisant le passage de la lumière,
- au moins un élément optique supplémentaire (14) obturant la au moins une fenêtre (22) et comprenant un dispositif optique convergent (16),
le guide optique (6) étant agencé pour permettre la propagation de la lumière par des réflexions internes totales successives depuis sa face d'entrée (8) vers sa face de sortie (10),
le module lumineux (2) étant **caractérisé en ce que** le module lumineux (2) comprend une pluralité des guides optiques et le cache opaque (20) comprend une pluralité de fenêtres (22), alignées selon un axe d'alignement (R) perpendiculairement à l'axe d'allongement (A) des guides optiques (6).

2. Module lumineux (2) selon la revendication précédente, **caractérisé en ce que** le dispositif optique convergent (16) est disposé sur une face interne (24) de l'élément optique supplémentaire (14) tournée en regard de la face de sortie (10) d'un guide optique (6).

3. Module lumineux (2) selon l'une quelconque des revendications précédentes, **caractérisé en ce que** le dispositif optique convergent (16) comprend une zone convexe (30) dirigée vers la face de sortie (10) d'un guide optique (6).

4. Module lumineux (2) selon la revendication précédente, **caractérisé en ce que** la zone convexe (30) a un rayon de courbure défini en fonction de la distance entre le centre de courbure de la zone convexe (30) et la face de sortie (10) du guide optique (6).

5. Module lumineux (2) selon l'une des revendications 3 ou 4, **caractérisé en ce que** le dispositif optique convergent (16) est une lentille cylindrique.

6. Module lumineux (2) selon la revendication précédente, **caractérisé en ce qu'**un foyer objet de la lentille cylindrique (30) est centrée sur le guide optique (6).

7. Module lumineux (2) selon l'une quelconque des revendications 3 à 6, **caractérisé en ce que** la zone convexe (30) est translucide.

8. Module lumineux (2) selon l'une quelconque des revendications 3 à 7, **caractérisé en ce que** la zone convexe (30) a une texture grainée.

9. Module lumineux (2) selon l'une quelconque des revendications 3 à 8, **caractérisé en ce que** le dispositif optique convergent (16) comprend une bordure (18) transparente autour de la zone convexe (30).

10. Module lumineux (2) selon la revendication précédente, **caractérisé en ce que** chaque fenêtre (22) est obturée par un dispositif optique convergent (16).

11. Module lumineux (2) selon l'une quelconque des revendications précédentes, **caractérisé en ce que** l'élément optique supplémentaire (14) comprend une pluralité de dispositifs optiques convergents (16) alignés.

12. Module lumineux (2) l'une quelconque des revendications précédentes, **caractérisé en ce que** l'élément optique supplémentaire (14) et la cache opaque (20) forme une seule pièce.

13. Dispositif d'éclairage et/ou de signalisation pour véhicule automobile comprenant un module lumineux selon l'une quelconque des revendications précédentes.

## Patentansprüche

1. Leuchtmodul (2) für Kraftfahrzeuge, umfassend:
- mindestens eine Lichtquelle (4)
- mindestens einen Lichtwellenleiter (6), umfassend eine Eintrittsfläche (8) für das von der Lichtquelle emittierte Licht und eine Austrittsfläche (10) für das Licht, wobei der Lichtwellenleiter (6) dazu eingerichtet ist, die Fortpflanzung des Lichts von seiner Eintrittsfläche (8) zu seiner Austrittsfläche (10) zu ermöglichen,
- eine lichtundurchlässige Blende (20), die auf dem Weg der Lichtstrahlen am Austritt des Lichtwellenleiters angeordnet ist und mindestens ein Fenster (22) umfasst, das den Lichtdurchgang erlaubt,
- mindestens ein zusätzliches optisches Element (14), das das mindestens eine Fenster (22) füllt und eine optische Konvergenzvorrichtung (16) umfasst,
wobei der Lichtwellenleiter (6) dazu eingerichtet ist, die Fortpflanzung des Lichts von seiner Eintrittsfläche (8) zu seiner Austrittsfläche (10) durch aufeinanderfolgende interne Totalreflexionen zu ermöglichen,
wobei das Leuchtmodul (2) **dadurch gekennzeichnet ist, dass** das Leuchtmodul (2) eine Vielzahl von Lichtwellenleitern umfasst und die lichtundurchlässige Blende (20) eine Vielzahl von Fenstern (22) umfasst,
die auf einer Ausrichtungsachse (R) senkrecht zur Längsachse (A) der Lichtwellenleiter (6) ausgerichtet sind.

2. Leuchtmodul (2) nach dem vorherigen Anspruch, **dadurch gekennzeichnet, dass** die optische Konvergenzvorrichtung (16) auf einer Innenfläche (24) des zusätzlichen optischen Elements (14) angeordnet ist, die zur Austrittsfläche (10) eines Lichtwellenleiters (6) weist.

3. Leuchtmodul (2) nach einem der vorhergehenden Ansprüche, **dadurch gekennzeichnet, dass** die optische Konvergenzvorrichtung (16) einen konvexen Bereich (30) umfasst, der zur Austrittsfläche (10) eines Lichtwellenleiters (6) gerichtet ist.

4. Leuchtmodul (2) nach dem vorherigen Anspruch, **dadurch gekennzeichnet, dass** der konvexe Bereich (30) einen Krümmungsradius aufweist, der in Abhängigkeit von der Entfernung zwischen dem Mittelpunkt der Krümmung des konvexen Bereichs (30) und der Austrittsfläche (10) des Lichtwellenleiters (6) definiert ist.

5. Leuchtmodul (2) nach einem der Ansprüche 3 oder 4, **dadurch gekennzeichnet, dass** die optische Konvergenzvorrichtung (16) eine zylindrische Linse ist.

6. Leuchtmodul (2) nach dem vorherigen Anspruch, **dadurch gekennzeichnet, dass** ein Objektfokus der zylindrischen Linse (30) auf den Lichtwellenleiter (6) zentriert ist.

7. Leuchtmodul (2) nach einem der Ansprüche 3 bis 6, **dadurch gekennzeichnet, dass** der konvexe Bereich (30) lichtdurchlässig ist.

8. Leuchtmodul (2) nach einem der Ansprüche 3 bis 7, **dadurch gekennzeichnet, dass** der konvexe Bereich (30) eine gekörnte Textur aufweist.

9. Leuchtmodul (2) nach einem der Ansprüche 3 bis 8, **dadurch gekennzeichnet, dass** die optische Konvergenzvorrichtung (16) einen transparenten Rand (18) um den konvexen Bereich (30) aufweist.

10. Leuchtmodul (2) nach dem vorherigen Anspruch, **dadurch gekennzeichnet, dass** jedes Fenster (22) durch eine optische Konvergenzvorrichtung (16) gefüllt ist.

11. Leuchtmodul (2) nach einem der vorhergehenden Ansprüche, **dadurch gekennzeichnet, dass** das zusätzliche optische Element (14) eine Vielzahl optischer Konvergenzvorrichtungen (16) umfasst.

12. Leuchtmodul (2) nach einem der vorhergehenden Ansprüche, **dadurch gekennzeichnet, dass** das zusätzliche optische Element (14) und die lichtundurchlässige Blende (20) ein einziges Teil bilden.

13. Beleuchtungs- und/oder Signalisierungsvorrichtung für Kraftfahrzeuge, umfassend ein Leuchtmodul nach einem der vorhergehenden Ansprüche.

## Claims

1. Luminous motor-vehicle module (2), comprising:
- at least one light source (4), at least one optical light guide (6) comprising an entrance face (8) for entry of the light emitted by the light source and an exit face (10) for exit of the light, the optical guide (6) being arranged to allow the propagation of light from its entrance face (8) to its exit face (10),
- an opaque shield (20) placed on the path of the light rays exiting from the optical guide and comprising at least one window (22) permitting the passage of the light,
- at least one additional optical element (14) obturating the at least one window (22) and comprising a convergent optical device (16),
the optical guide (6) being arranged to allow the light to propagate via successive total internal reflections, from its entrance face (8) to its exit face (10),
the luminous module (2) being **characterized in that** the luminous module (2) comprises a plurality of optical guides and the opaque shield (20) comprises a plurality of windows (22) that are aligned along an axis of alignment (R) perpendicular to the axis of elongation (A) of the optical guides (6).

2. Luminous module (2) according to the preceding claim, **characterized in that** the convergent optical device (16) is placed on an internal face (24) of the additional optical element (14), said face being turned to face the exit face (10) of an optical guide (6).

3. Luminous module (2) according to either one of the preceding claims, **characterized in that** the convergent optical device (16) comprises a convex region (30) directed towards the exit face (10) of an optical guide (6).

4. Luminous module (2) according to the preceding claim, **characterized in that** the convex region (30) has a radius of curvature defined depending on the distance between the centre of curvature of the convex region (30) and the exit face (10) of the optical guide (6).

5. Luminous module (2) according to either of Claims 3 and 4, **characterized in that** the convergent optical device (16) is a cylindrical lens.

6. Luminous module (2) according to the preceding claim, **characterized in that** an object focal point of the cylindrical lens (30) is centred on the optical guide (6).

7. Luminous module (2) according to any one of Claims 3 to 6, **characterized in that** the convex region (30) is translucent.

8. Luminous module (2) according to any one of Claims 3 to 7, **characterized in that** the convex region (30) has a grained texture.

9. Luminous module (2) according to any one of Claims 3 to 8, **characterized in that** the convergent optical device (16) comprises a transparent border (18) around the convex region (30).

10. Luminous module (2) according to the preceding claim, **characterized in that** each window (22) is obturated by one convergent optical device (16).

11. Luminous module (2) according to any one of the preceding claims, **characterized in that** the additional optical element (14) comprises a plurality of aligned convergent optical devices (16) .

12. Luminous module (2) according to any one of the preceding claims, **characterized in that** the additional optical element (14) and the opaque shield (20) form a single part.

13. Motor-vehicle lighting and/or signalling device comprising a luminous module according to any one of the preceding claims.
